# NOUVEAU FASCICULE DE BREVET EUROPEEN

(11) **EP 0 552 079 B2**
(45) Date de publication et mention de la décision concernant l'opposition: **28.01.2004**
(45) Mention de la délivrance du brevet: 08.12.1999
(21) Numéro de dépôt: 93400041.5
(22) Date de dépôt: 08.01.1993
(51) Int. Cl.: G06F 12/14

(54) **Carte à mémoire de masse pour microordinateur**
Massenspeicherkarte für einen Mikrocomputer
Mass memory card for microcomputer

(30) Priorité: 14.01.1992 FR 9200321
(43) Date de publication de la demande: 21.07.1993
(73) Titulaire: GEMPLUS, 13881 Gémenos Cédex (FR)
(72) Inventeur: Le Roux, Jean-Yves, F-75116 Paris (FR); Peyret, Patrice, F-75116 Paris (FR)

(56) Documents cités:
- EP-A- 0 138 219
- EP-A- 0 337 185
- EP-A- 0 368 596
- EP-B- 0 337 185
- FR-A- 2 613 856
- US-A- 4 734 568

## Description

Les cartes à mémoire de masse amovibles pour microordinateurs (ou ordinateurs personnels ou PC, de l'anglais"'personal computer") ont fait leur apparition récemment comme accessoires des ordinateurs personnels, surtout pour les ordinateurs portables. Elles pourraient remplacer dans l'avenir les disquettes et autres moyens de stockage de masse de type magnétique. Elles peuvent servir de mémoire de masse d'aussi grande capacité que les disquettes magnétiques (ordre de grandeur : le million d'octets); leur encombrement n'est pas plus grand (format carte de crédit, épaisseur de 3 à 5 millimètres); elles sont beaucoup plus rapides d'accès (plusieurs milliers de fois plus rapides).

Elles peuvent même servir de mémoire vive de programme directement exécutable par le microordinateur. Dans ce cas, contrairement aux mémoires de masse magnétiques, elles n'ont pas à être déchargées dans la mémoire vive (RAM) du PC pour être exécutées ensuite. Les programmes qu'elle contient sont exécutables directement par le PC.

Les cartes à mémoire de masse, parfois appelées encore PC-Cards, comportent plusieurs puces de mémoire et un connecteur (connecteur femelle de 68 broches selon la norme PCMCIA de "Personal Computer Memory Card International Association" 1030B East Duane Avenue Sunnyvale, California). La carte est enfichable dans un connecteur correspondant (mâle) de l'ordinateur. Les connexions sont telles que la mémoire puisse être adressée par un port d'entrée-sortie parallèle du PC, soit comme si la mémoire était une mémoire de masse magnétique, soit comme si elle était une extension de mémoire vive de l'ordinateur.

Selon l'invention, on a pensé qu'il serait souhaitable de sécuriser autant que possible les cartes à mémoire de masse pour ordinateurs personnels. En effet, leur grande capacité fait qu'elles peuvent contenir soit des bases de données importantes méritant d'être protégées en lecture comme en écriture, soit des programmes coûteux qu'on ne souhaite pas voir utiliser ou dupliquer sans autorisation; ou enfin, elles peuvent servir à assurer des transactions confidentielles selon des programmes plus sophistiqués que ceux qui existent actuellement, ou impliquant des quantités de données plus importantes que ce que peuvent stocker les simples cartes à puces de transactions sécurisées qui ne comportent qu'une puce.

Les solutions actuellement disponibles pour assurer une certaine sécurité sont les suivantes :
- d'abord on peut utiliser les mêmes types de protection que pour les mémoires magnétiques; parmi celles-ci il y a la possibilité de cacher les fichiers par des attributs logiciels qui les rendent invisibles pour l'utilisateur lorsque celui-ci cherche à y accéder par le microordinateur. C'est une solution classique pour les PC fonctionnant sous système DOS. Mais on sait qu'un utilisateur averti peut facilement tourner ces protections en accédant de manière logicielle aux attributs des fichiers et en les modifiant. Cela ne constitue donc qu'une protection sommaire;
- il y a ensuite toutes les protections classiques utilisées par les fabricants de logiciels pour protéger ceux-ci contre la copie. Ces solutions sont plus ou moins efficaces, et ne servent en tout cas pas à protéger contre l'utilisation;
- est connue enfin l'utilisation de cartes à puces de sécurité pour protéger un ordinateur (ou d'autres appareils) contre une utilisation par un titulaire non habilité. Cette solution va être rappelée plus en détail ci-après.

On connaît aussi selon le document EP 0 152 024 une carte à puce contenant un microprocesseur, une première mémoire spécifique pour stocker des règles d'accès à des zones d'une deuxième mémoire de la carte à puce.

Pour assurer une autorisation d'accès à un PC on a proposé d'adjoindre aux PC un lecteur de carte à puce de sécurité : le lecteur de carte à puce est connecté au PC; c'est d'ailleurs le clavier et l'écran de l'ordinateur qui servent d'interface pour assurer l'échange de données en vue des opérations d'autorisation; la carte à puce comporte une puce unique qui est un module de sécurité. La sécurité consiste à empêcher l'utilisation du PC si l'utilisateur ne fournit pas les codes de confidentialité adéquats. Ces codes sont introduits à partir du clavier du PC, selon un protocole d'échange spécialement prévu entre le PC et la carte. C'est le PC dont l'utilisation est à protéger qui peut lui-même servir à assurer les échanges. La carte à puce ne fait pas partie du PC. L'utilisateur emporte sa carte de sécurité après avoir utilisé l'appareil pour ne pas en laisser la libre disposition à un tiers non autorisé; la sécurité repose en effet essentiellement sur la possession simultanée de la carte et d'un code confidentiel attribué à cette carte.

Si on veut protéger maintenant non pas le PC dans son ensemble (car on veut qu'il puisse servir à d'autres pour des utilisations courantes) mais la carte à mémoire de masse qu'on va lui raccorder, il faut prévoir alors que la carte de sécurité connectée au lecteur de carte associé au PC va provoquer non pas l'interdiction totale de fonctionnement du PC mais sélectivement l'interdiction de fonctionnement du port auquel est raccordée la carte à mémoire de masse.

On pense cependant que cette solution présente des inconvénients et n'assure pas une sécurité suffisante contre une utilisation non souhaitée de la carte.

Selon l'invention, on propose une solution originale consistant à incorporer à la carte à mémoire de masse amovible elle-même (qui comporte plusieurs circuits-intégrés de mémoire) au moins un circuit intégré de sécurité apte à contrôler l'accès aux zones de mémoire de la mémoire de masse.

Le contrôle est fait en principe en fonction d'informations d'habilitation que l'utilisateur doit fournir par l'intermédiaire de l'ordinateur (code confidentiel introduit au clavier ou autre mode d'habilitation).

Par circuit de sécurité on entend ici une puce de circuit-intégré unique comportant une mémoire non volatile avec des informations confidentielles qui ne peuvent pas être transmises sur les bornes extérieures du circuit-intégré, et une circuiterie de sécurité programmée, apte à utiliser ces informations confidentielles et d'autres informations fournies par l'utilisateur, pour délivrer des instructions de validation après vérification d'une relation prédéterminée entre ces deux types d'information: les données confidentielles ne sortent pas à l'extérieur du circuit intégré.

Ce circuit de sécurité est de préférence le même que le circuit unique d'une carte à puce d'habilitation (celle dont on a parlé plus haut et qui peut servir à autoriser le fonctionnement d'un ordinateur lorsque le titulaire l'introduit dans l'ordinateur). Mais ici, on n'utilise pas une carte d'habilitation amovible servant à autoriser le fonctionnement de l'ordinateur ou du port de connexion avec la mémoire de masse. On place directement une puce de sécurité dans la mémoire de masse pour sécuriser le contenu de celle-ci.

Il faut noter que les puces de sécurité utilisées pour protéger en lecture ou écriture les données d'une mémoire ne servaient jusqu'à présent qu'à protéger le contenu de la mémoire interne de la puce elle-même, utilisant le fait que dans le cas d'une puce unique les données à protéger ne sont pas transmises en dehors de la puce. Et il ne s'agissait d'ailleurs pas de mémoires de masse mais de très petites mémoires, justement parce que ces mémoires étaient placées dans la puce. Et par ailleurs les puces de sécurité utilisées pour protéger d'autres appareils étaient incorporées à une carte de sécurité distincte de l'appareil à protéger, carte que l'utilisateur habilité transporte avec lui et ne laisse pas dans l'appareil à protéger. Ici, on n'utilise pas de carte à puce distincte de l'appareil à protéger et transportable à distance de l'appareil à protéger, mais plutôt une puce de circuit-intégré montée de manière inamovible dans la carte à mémoire dont l'utilisation doit être protégée.

Par cette disposition on atteint une protection de fichiers, en lecture et/ou en écriture bien supérieure à celle qui est obtenue par les moyens standards (de type logiciel : fichiers cachés) de protection de fichiers d'ordinateurs personnels.

La puce de sécurité (appelée ci-après également module de sécurité) contrôle (directement ou indirectement) les moyens d'accès aux différentes puces de mémoire de la carte.

En pratique, on préférera utiliser une puce de sécurité de type standard, c'est-à-dire du type utilisé dans les cartes de sécurité d'accès à des appareils ou des locaux, ou encore dans les cartes de transactions sécurisées: ces puces utilisent un mode de communication série: elles n'ont en général que six ou huit plots de connexion avec l'extérieur, dont un seul plot de communication de données ou d'instructions.

On préfère alors placer dans la carte à mémoire une puce supplémentaire constituant un processeur de contrôle de la carte. Ce processeur ou microcontrôleur aura pour fonction de réaliser une interface entre le connecteur de la carte et la puce de sécurité, et une interface entre la puce de sécurité et les puces de mémoire. En pratique, le déroulement d'un programme de vérification de l'habilitation d'un titulaire pourra se faire sous la commande du processeur de contrôle: ce programme pourra alors être contenu dans une mémoire de programme faisant partie de la même puce que le processeur de contrôle: ou alors ce programme pourra être contenu éventuellement dans une partie de la mémoire de masse elle-même, si cette partie est connectée à un bus exécutable du processeur de contrôle.

La puce de sécurité comporte elle-même un microprocesseur et des mémoires, avec parmi ces mémoires des mémoires non volatiles programmables électriquement et éventuellement effaçables électriquement. Le programme de fonctionnement de ce microprocesseur est en principe enregistré dans une mémoire morte de la puce: mais il peut être également partiellement enregistré dans une mémoire non volatile programmable et effaçable électriquement. Le contenu de certaines au moins des mémoires non volatiles n'est pas accessible en lecture sur les bornes extérieures de la puce. Ce contenu est utilisé exclusivement par le microprocesseur pour ses besoins propres, et notamment pour l'exécution de programmes de sécurité faisant intervenir des codes secrets placés dans ces mémoires inaccessibles.

On peut par exemple envisager que la mémoire de données confidentielles de la puce de sécurité contienne un mot d'habilitation pour chaque zone mémoire de la mémoire de masse : s'il y a 24 puces mémoires il peut y avoir 24 mots d'accès différents: il peut aussi y avoir des hiérarchies d'accès pour l'accès à plusieurs zones de mémoire.

Par ailleurs, pour une sécurité renforcée, on peut prévoir que les données stockées dans la mémoire de masse sont cryptées et que le module de sécurité comporte un programme de cryptage et décryptage. Les données de la mémoire peuvent alors être communiquées à travers le module de sécurité (en lecture ou en écriture). Le module de sécurité peut effectuer lui-même le cryptage ou le décryptage: mais il peut aussi fournir une clé de calcul au processeur de contrôle qui effectuera alors lui-même le cryptage et le décryptage (seulement en présence d'une habilitation reconnue par la puce de sécurité).

L'invention a plus particulièrement pour objet une carte à mémoire de masse selon la revendication 1.

D'autres caractéristiques et avantages de l'invention apparaîtront à la lecteur de la description détaillée qui suit et qui est faite en référence aux dessins annexés dans lesquels:
- la figure 1 représente l'architecture de la carte à mémoire de masse selon l'invention:
- la figure 2 représente un détail de circuit.

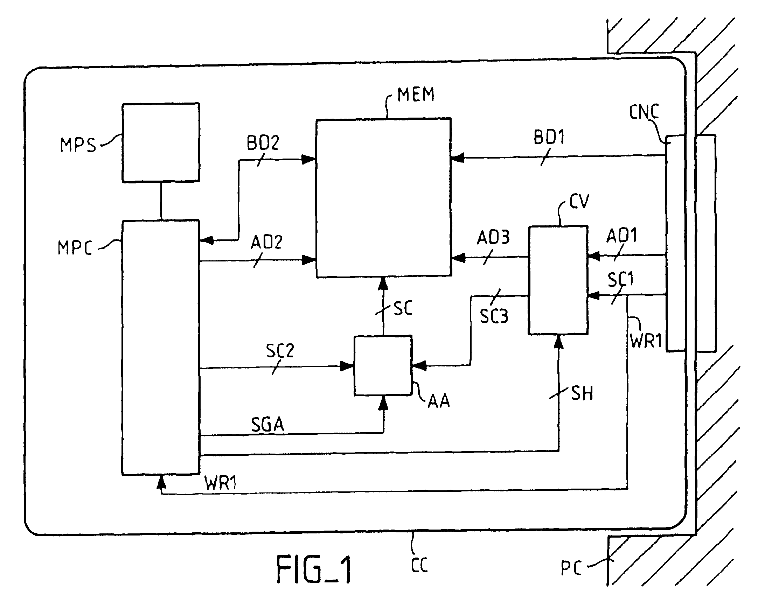

La carte CC représentée à la figure 1 est destinée à être insérée dans un ordinateur personnel (appelé ci-après PC pour "personal computer"): la carte comporte un connecteur enfichable standard CNC, de préférence du type défini par la norme PCMCIA et le PC comporte un connecteur correspondant pour recevoir la carte.

La carte est une carte à mémoire, c'est-à-dire qu'elle est destinée à servir principalement à stocker des données. Pour cette fonction, la carte comporte soit plusieurs types de mémoire différents (RAM statique ou dynamique, ROM, EPROM, EEPROM, FLASHEPROM sont les types les plus courants) soit un seul type de mémoire. Si les mémoires sont des mémoires RAM, par essence volatiles, on peut prévoir une pile d'alimentation de secours pour la sauvegarde des données.

Pour obtenir une plus grande capacité de stockage, plusieurs puces de circuit-intégré sont prévues, chacune étant une puce de mémoire. Ces puces sont globalement désignées sous la référence MEM. Il peut y avoir plusieurs dizaines de puces sur la carte pour des grandes capacités de stockage (plusieurs mégaoctets par exemple).

La carte CC est un organe périphérique amovible de l'ordinateur PC. Elle peut être utilisée soit comme périphérique de stockage de masse, soit comme extension de mémoire vive. C'est l'ordinateur qui gère ce choix (lorsqu'un choix est possible, c'est-à-dire surtout lorsqu'il y a plusieurs types de mémoire dans la carte).

Outre les mémoires MEM, la carte comporte, selon l'invention, un module de sécurité, qui est une puce de circuit-intégré MPS comportant un microprocesseur, de petites mémoires, et des programmes pour le fonctionnement du microprocesseur: ce module a pour fonction essentielle d'assurer la sécurité d'accès aux mémoires MEM à partir de l'ordinateur.

De préférence, la carte CC comprend encore une puce supplémentaire qui est un processeur de contrôle ou microcontrôleur MPC, c'est-à-dire un microprocesseur auquel sont associées des mémoires de programmes. Ce microcontrôleur MPC a pour fonction l'émission de signaux de contrôle d'accès aux puces de mémoire en fonction d'informations de sécurité données par le module de sécurité MPS et en fonctions de requêtes d'accès faites à partir du PC. On notera que ce microcontrôleur possède des sorties de données en parallèle pour fournir directement plusieurs signaux de contrôle à destination des mémoires. Le module de sécurité n'a quant à lui en principe que des sorties de données en série sur une seule borne d'entrée/sortie, et c'est la raison pour laquelle deux puces différentes MPS et MPC sont prévues avec chacune un microprocesseur. Si le module MPS avait des sorties de données parallèles on pourrait se dispenser de la puce MPC: les fonctions de ces deux circuits seraient accomplies par un seul circuit à microprocesseur comportant des mémoires de programmes correspondant aux différentes fonctions à accomplir.

Le module de sécurité MPS agit comme "esclave" par rapport à un "maître" qui est le microcontrôleur MPC.

Les mémoires MEM sont connectées au PC par l'intermédiaire de plusieurs bus : un bus d'adresse, un bus de données, et un bus de signaux de contrôle. Toutefois, ces bus sont contrôlés par un circuit de verrrouillage CV, lui-même contrôlé par le microcontrôleur MPC, de manière que l'accès aux mémoires ne soit pas complètement libre, sauf si l'autorisation en est donnée par le microcontrôleur MPC.

Dans l'exemple représenté, on a supposé que le circuit de verrouillage CV agit sur le bus d'adresse et sur le bus de signaux de contrôle mais pas sur le bus de données. D'autres solutions sont cependant possibles.

C'est pourquoi on a représenté d'une part un bus de données BD1 allant directement du connecteur CNC à la mémoire MEM: d'autre part un bus d'adresse allant du connecteur à la mémoire et interrompu par le circuit de verrouillage CV: ce bus est référencé AD1 en amont du circuit de verrouillage (du côté du connecteur) et AD3 en aval (du côté de la mémoire): enfin, un bus de signaux de contrôle (SC1 en amont, SC3 en aval) également interrompu par le circuit de verrouillage CV On remarquera provisoirement qu'un autre circuit (circuit d'aiguillage AA) est interposé entre le bus SC3 et la mémoire. Il a pour fonction d'aiguiller vers la mémoire soit les signaux de contrôle du bus SC3 en provenance du PC, soit des signaux de contrôle d'un bus SC2 en provenance du microcontrôleur MPC. On reviendra sur ce point plus loin. Le bus de signaux de contrôle aboutissant finalement à la mémoire est désigné par SC, en aval du circuit d'aiguillage.

A titre d'exemple illustratif simplifié, on peut considérer par exemple que les bus de contrôle SC1, ou SC2 ou SC3 ou SC transportent des signaux tels que des ordres de lecture (RD1, RD2, RD3, RD) ou d'écriture (WR1, WR2, WR3, WR) ou des ordres de sélection d'une puce parmi plusieurs (CEa1, CEa2, CEa3, CEa pour la sélection d'une puce de mémoire A parmi plusieurs puces A, B, C; ou CEb1, CEb2, CEb3, CEb pour la puce B, etc.).

Le circuit de verrouillage CV est directement contrôlé par un bus d'habilitation SH issu du microcontrôleur MPC. Ce bus transporte des signaux d'autorisation ou d'interdiction de passage des signaux de contrôle ou d'adresse qui transitent à travers le circuit de verrouillage CV. A titre d'exemple toujours, on peut imaginer qu'il y a un signal d'habilitation de lecture SHR, un signal d'habilitation d'écriture SHW, des signaux d'habilitation pour chaque puce de mémoire, SHA pour la puce A, SHB pour la puce B, SHC pour la puce C.

La particularité est que les signaux d'habilitation sont directement issus du microcontrôleur MPC.

Le microcontrôleur MPC a donc la possibilité d'interdire électroniquement et sélectivement l'accès en lecture ou en écriture à certaines parties de la mémoire MEM de la carte.

Pour terminer la description générale de l'architecture de la figure 1, on signalera encore les points suivants :
- le microcontrôleur MPC peut accéder à volonté à la mémoire MEM: le plus simple est de prévoir que cette mémoire est à double accès et c'est pourquoi on a représenté un bus d'adresse AD2 et un bus de données BD2 entre le microcontrôleur et la mémoire: mais cette solution n'est pas obligatoire, une mémoire à simple accès étant également possible:
- l'accès par le microcontrôleur MPC à la mémoire se fait à l'aide d'un bus de signaux de contrôle SC2 issu du microcontrôleur, mais, comme on l'a dit, ce bus transite à travers le circuit d'aiguillage AA: cette disposition vise à permettre un fonctionnement du microcontrôleur en circuit fermé avec la mémoire MEM pendant certaines phases de programmes:

- un signal d'aiguillage général SGA, issu du microcontrôleur MPC commande l'aiguillage AA.
- enfin, dans le cas général où des demandes formulées par le PC extérieur transitent systématiquement par la mémoire MEM avant d'aboutir au microcontrôleur pour être interprétées et exécutées, il est utile de prévoir que les ordres d'écriture WR1 issus du PC sont appliqués directement au microcontrôleur MPC: de cette manière, ce dernier peut savoir qu'une demande a été faite et peut aller chercher éventuellement une instruction à interpréter: c'est pourquoi une connection directe WR1 a été représentée entre le connecteur CNC et le microcontrôleur.

L'accès à certaines zones de mémoire (certaines puces par exemple ou certaines zones de puces) est autorisé par le microcontrôleur MPC en fonction de critères de sécurité prédéfinis et en fonction de confirmations données par le module de sécurité.

Le module de sécurité est par exemple la puce de circuit intégré du composant vendu par SGS-THOM-SON sous la référence ST16612, à laquelle est incorporé te programme de mémoire non volatile MCOS de la société GEMPLUS. Ce composant possède les particularités suivantes : les données de mémoire sont invisibles pour l'utilisateur car elles ne transitent pas sur les entrées-sorties de la puce. Elles sont également invisibles optiquement (masquées). La puce comporte un microprocesseur et lui seul peut aller chercher et traiter des données en mémoire. Les programmes de mémoire morte sont réalisés par masquage. Ils ne sont donc pas modifiables. Ces programmes n'autorisent pas l'accès à toutes les zones de mémoire de la puce. Lorsqu'un code secret d'habilitation est présenté sur les entrées de la puce, il est traité par le microprocesseur qui fournit en réponse des signaux d'habilitation ou d'interdiction, et à aucun moment la nature du traitement de vérification ne peut être détectée sur les bornes d'entrée/sortie de la puce.

La procédure se déroule par exemple de la manière suivante : l'insertion de la carte à mémoire de masse dans l'ordinateur déclenche les opérations suivantes : demande par le PC du code confidentiel d'habilitation du titulaire; ce code est introduit par l'utilisateur sur le clavier du PC selon un protocole de communication parallèle standard pour un PC. Il est transmis au processeur de contrôle MPC de la carte et retransmis par celui-ci vers le module de sécurité MPS dans un format compréhensible par celui-ci (en principe par conséquent sous forme série sur la seule borne d'entrée/sortie disponible sur la puce MPS). Le module de sécurité vérifie le code confidentiel et transmet au processeur de contrôle un mot de contrôle traduisant l'état des autorisations données (interdiction totale, autorisation totale, autorisation partielle de certaines zones de mémoire par exemple). Le processeur de contrôle MPC reçoit ce mot sous forme sérielle et établit alors sur le bus SH les signaux d'habilitation correspondants (SHA, SHB, SHC, SHR, SHW ...) qui commandent l'accès aux diverses puces de mémoire. Puis le processeur de contrôle renvoie vers le PC un mot d'état indiquant que la procédure de sécurité a été effectuée et indiquant le résultat de cette procédure.

Dans ce système on comprend que c'est le microcontrôleur MPC qui gère les programmes de sécurité de la carte à mémoire. Il définit les autorisations et les interdictions, et utilise le module de sécurité comme organe spécialisé de vérification d'une habilitation par code confidentiel. Aucune opération de sécurité d'accès n'est gérée par le PC.

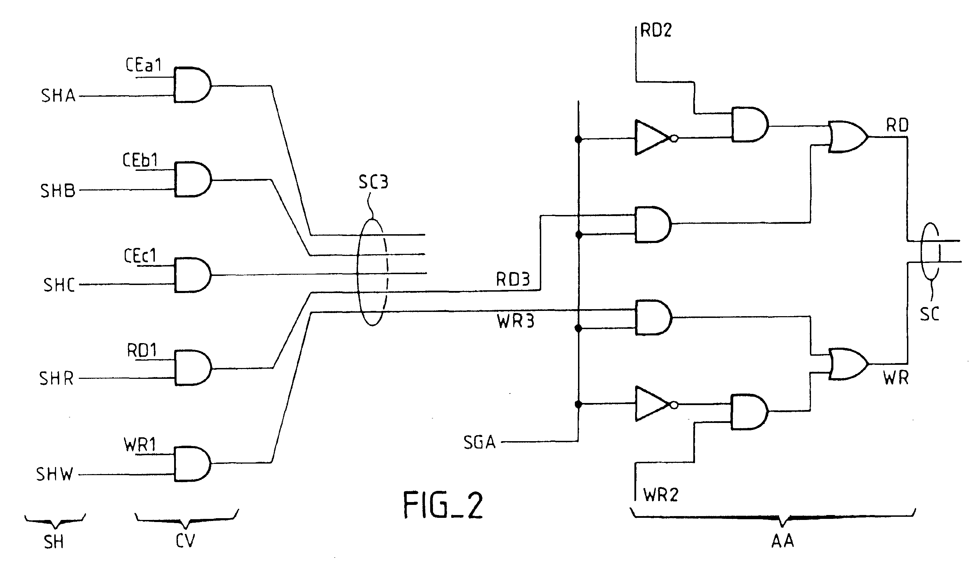

Les circuits de verrouillage et d'aiguillage CV et AA sont des circuits de logique câblée extrêmement simples. Un exemple en est donnée à la figure 2 pour faciliter la compréhension du principe de l'invention.

On suppose par exemple que l'accès aux diverses puces de mémoire en lecture et en écriture exige la présence de signaux de sélection de puces ("chip enable") CEa, CEb, CEc pour les puces A, B, C respectivement, et la présence d'ordres de lecture RD ou d'écriture WR. Les signaux CEa, CEb, CEc forment donc dans cet exemple le contenu du bus de contrôle SC aboutissant à la mémoire MEM.

Des demandes d'accès sont formulées par le PC extérieur sous formes de signaux CEa1, CEb1, CEc1, RD1, WR1 sur le bus SC1. Des signaux SHA, SHB, SHC, SHR, SHW sont présents sur le bus d'habilitation SH. Chacun de ces signaux commande l'ouverture ou la fermeture d'une porte ET respective: chacune des portes reçoit un signal de contrôle respectif. Les sorties de ces portes constituent le bus SC3 de la figure 1, transportant ou non les signaux de contrôle tels que reçus du PC selon les autorisations données par le microcontrôleur.

Les signaux de contrôle transportés sur le bus SC3 sont appliqués au circuit d'aiguillage AA qui a été représenté partiellement sur la figure 2.

Le circuit d'aiguillage est contrôlé par un signal d'aiguillage SGA. Selon l'état de ce signal, on transfère vers le bus SC (c'est-à-dire vers la mémoire MEM) soit les signaux de contrôle issus du bus SC3 (par exemple RD3, WR3, etc.) donc du PC sous contrôle du microcontrôleur, soit les signaux de contrôle (RD2, WR2, etc.) issus du microcontrôleur lui-même.

Par exemple, pour l'aiguillage des signaux de contrôle de lecture RD, une porte ET reçoit RD3 et est commandée par le signal SGA; une autre reçoit RD2 et est commandée par le complément logique de SGA, et une porte OU reçoit les sorties de ces deux portes et fournit le signal de lecture RD; ce signal est soit RD2 soit RD3 selon l'état de SGA.

L'action du circuit de verrouillage CV a été représentée sur les signaux de contrôle uniquement, mais on comprendra, conformément à l'architecture dessinée sur la figure 1, qu'elle peut s'exercer aussi sur les bits d'adresse envoyés par le PC.

Dans une structure de sécurité renforcée, les données stockées dans la mémoire sont cryptées au moyen d'une clé secrète. La clé secrète de décryptage n'est pas connue de l'utilisateur. Elle est contenue dans le module de sécurité. Sur présentation d'un code d'habilitation valable, le module de sécurité fournit la clé secrète au microcontrôleur MPC qui peut alors exécuter un programme de décryptage des données de mémoire et les transmettre au PC sous forme déchiffrée. On s'assure ainsi que les données stockées dans la mémoire ne sont pas copiables utilement par une personne non habilitée. L'inscription de données dans la mémoire peut aussi se faire de manière cryptée avec la même clé de cryptage, et là encore seulement après reconnaissance de l'habilitation de l'utilisateur.

On notera qu'on ne fait pas sortir des données sous forme cryptée comme c'est le cas dans certaines applications de sécurité, mais on crypte les données stockées à l'intérieur de la carte à mémoire pour qu'une copie de ces données soit inutilisable par quelqu'un qui n'est pas habilité.

Cela veut dire en particulier que même si on forçait frauduleusement le signal SGA ou les signaux RD, WR, pour lire les données de la carte, ces données resteraient inexploitables.

Des variantes de l'invention sont possibles : par exemple, on peut prévoir soit que les adresses et données transitent librement du PC vers les mémoires et inversement lorsque l'habilitation a été donnée, soit que les adresses et/ou les données transitent toujours par le microcontrôleur.

Dans cette réalisation, on a supposé, pour des raisons pratiques de communication rapide avec le PC que les entrées-sorties de la carte constituent un connecteur parallèle au standard PCMCIA. Mais dans certains cas, on peut imaginer que la sortie se fait sur un connecteur à contacts affleurants au standard ISO 7816, ne comportant que quelques contacts, parmi lesquels un seul contact d'entrée-sortie en mode de communication série. On obtient ainsi une carte à mémoire sécurisée de grande capacité au standard des cartes de crédit, insérable dans un lecteur de carte de crédit classique à la seule condition que l'épaisseur de la carte dans la région qui devra être insérée soit assez mince pour entrer dans la fente du lecteur. Une zone de carte amincie pourra être prévue si c'est nécessaire; cette zone portera les contacts affleurants au standard ISO 7816.

Pour terminer cette description, on peut donner un exemple de fonctionnement avec sécurité renforcée dans lequel certains fichiers de la mémoire MEM sont encore plus protégés. A chaque fichier protégé est associé une certaine "signature" qui représente ce fichier et qui est altérée si le fichier est modifié. Cette signature est constituée à partir du contenu du fichier lui-même : par exemple c'est la concaténation de tous les bits du fichier. Cette signature est stockée dans une mémoire non volatile et non accessible du module de sécurité. Lorsque le fichier doit être utilisé (et tout particulièrement dans le cas où il va servir de programme exécutable par le microcontrôleur MPC), on va d'abord vérifier qu'il n'y a pas eu altération du fichier. S'il y a eu altération, on empêchera toute utilisation. Pour cela, le microcontrôleur va d'abord recalculer la signature du fichier (auquel il a accès); il va demander au module de sécurité quelle est la signature attendue; puis faire la comparaison et ne valider l'utilisation que si les signatures se correspondent. La comparaison pourrait aussi se faire à l'intérieur du module de sécurité. Il peut y avoir dans le module de sécurité autant de signatures stockées que de fichiers à protéger. Il y a donc dans le module de sécurité une "image" des fichiers à protéger de la mémoire MEM, sous forme d'un fichier de signatures correspondant aux diverses parties à protéger.

## Revendications

1. Carte à mémoire (CC) à plusieurs circuits intégrés de mémoire constituant une mémoire de masse amovible pour un microordinateur (PC), **caractérisée en ce qu'**elle comporte en outre :
un module de sécurité (MPS) qui consiste en une puce de circuit intégré spécifique comprenant un microprocesseur et au moins une mémoire dont le contenu n'est pas accessible en lecture sur les bornes extérieures de la puce, et est utilisé exclusivement par le microprocesseur pour l'exécution de programmes de sécurité faisant intervenir des codes secrets placés dans cette mémoire inaccessible, pour assurer la sécurité contre l'accès à au moins certaines zones de mémoire par un utilisateur du microordinateur qui n'est pas habilité à cet accès ; et
un processeur de contrôle qui gère les programmes de sécurité de la carte à mémoire et émet des signaux de contrôle d'accès aux puces de mémoire en fonction de requêtes d'accès à partir du PC et en fonction d'informations de sécurité données par le module de sécurité, permettant à ce dernier de contrôler les moyens d'accès aux différentes puces de mémoire, ledit processeur de contrôle réalisant une interface entre le connecteur de la carte et la puce assurant la sécurité et une interface entre la puce assurant la sécurité et les puces de mémoire.

2. Carte à mémoire selon la revendication 1, **caractérisée en ce que** le module de sécurité (MPS) est une puce de circuit intégré unique comportant une mémoire non volatile avec des informations confidentielles, et une circuiterie de sécurité programmée, apte à utiliser ces informations confidentielles et d'autres informations fournies par l'utilisateur, pour délivrer des instructions de validation après vérification d'une relation prédéterminée entre ces deux types d'information.

3. Carte à mémoire selon l'une des revendications 1 et 2, **caractérisée en ce que** le processeur de contrôle consiste en une puce de microcontrôleur (MPC) comportant des programmes en mémoire non volatile pour contrôler le module de sécurité (MPS), lui faire exécuter des tâches de vérification d'habilitation et utiliser les signaux émis par le module de sécurité pour contrôler l'accès aux zones de mémoire en fonction de ces signaux.

4. Carte à mémoire selon l'une des revendications précédentes, **caractérisée en ce que** des moyens sont prévus pour exécuter une programme de cryptage des données introduites dans la mémoire et un programme de décryptage des données extraites de la mémoire, le programme de cryptage et le programme de décryptage étant exécutables seulement après fourniture de signaux d'habilitation par le module de sécurité.

5. Carte à mémoire selon la revendication 4, **caractérisée en ce que** les programmes de cryptage et de décryptage sont exécutables à l'aide d'une clé de cryptage contenue dans le module de sécurité.

6. Carte à mémoire selon l'une des revendications 1 à 3, **caractérisée en ce que** le module de sécurité comporte un fichier de signatures calculées de fichiers à protéger contenus dans la mémoire (MEM), et **en ce que** la carte comporte des moyens pour vérifier que la signature d'un fichier déterminé est bien la même que la signature stockée dans le module de sécurité.

## Patentansprüche

1. Speicherkarte (CC) mit mehreren integrierten Schaltkreisen, die einen abnehmbaren Massespeicher für einen Mikrocomputer (PC) bilden, **dadurch gekennzeichnet, dass** sie weiters ein Sicherheitsmodul (MPS) aufweist, das aus einem spezifischen Chip des integrierten Schaltkreises besteht mit einem Mikroprozessor und mindestens einem Speicher, dessen Inhalt an den externen Klemmen des Chips nicht für Lesezugriffe zugänglich ist und ausschließlich vom Mikroprozessor benutzt wird zur Ausführung von Sicherheitsprogrammen durch Verwendung von in diesem unzugänglichen Speicher eingetragenen Geheimcodes, um die Sicherheit gegen Zugriffe auf zumindest bestimmte Speicherzonen durch einen Verwender des Mikrocomputers zu gewährleisten, der zu diesem Zugriff nicht berechtigt ist, und einen Kontrollprozessor, der die Sicherheitsprogramme der Speicherkarte verwaltet und, j e nach den Zugriffsanfragen ab dem PC und je nach von dem Sicherheitsmodul gelieferten Sicherheitsinformationen, die diesem gestatten, die Zugriffsmittel auf die einzelnen Speicherchips zu kontrollieren, Zugriffskontrollsignale an die Speicherchips abgibt, wobei der besagte Kontrollprozessor eine Schnittstelle zwischen dem Steckverbinder der Karte und dem die Sicherheit gewährleistenden Chip und eine Schnittstelle zwischen dem die Sicherheit gewährleistenden Chip und den Speicherchips herstellt.

2. Speicherkarte nach Anspruch 1, **dadurch gekennzeichnet, dass** das Sicherheitsmodul (MPS) ein einziger Chip des integrierten Schaltkreises ist, der einen nicht flüchtigen Speicher mit vertraulichen Informationen umfasst, sowie einen programmierten Sicherheitsschaltkreis, der diese vertraulichen und andere, vom Verwender gelieferten Informationen verwenden kann, um nach Überprüfung einer vorgegebenen Beziehung zwischen diesen beiden Informationsarten Validierungsanweisungen auszugeben.

3. Speicherkarte nach einem der Ansprüche 1 und 2, **dadurch gekennzeichnet, dass** der Kontrollprozessor aus einem Mikrocontroller-Chip (MPC) besteht, der in einem nicht flüchtigen Speicher Programme enthält, um das Sicherheitsmodul (MPS) zu kontrollieren, es Berechtigungsüberprüfungsaufgaben durchführen zu lassen und um die vom Sicherheitsmodul ausgegebenen Signale zu verwenden, um den Zugriff auf die Speicherzonen entsprechend dieser Signale zu kontrollieren.

4. Speicherkarte nach einem der vorstehend genannten Ansprüche, **dadurch gekennzeichnet, dass** Mittel vorgesehen sind, um ein Verschlüsselungsprogramm der in den Speicher eingefügten Daten sowie ein Entschlüsselungsprogramm der aus dem Speicher entnommenen Daten auszuführen, wobei das Verschlüsselungsprogramm und das Entschlüsselungsprogramm erst nach Lieferung von Berechtigungssignalen vom Sicherheitsmodul ausgeführt werden können.

5. Speicherkarte nach Anspruch 4, **dadurch gekennzeichnet, dass** die Verschlüsselungs- und Entschlüsselungsprogramme mittels eines im Sicherheitsmodul enthaltenen Verschlüsselungsschlüssels ausführbar sind.

6. Speicherkarte nach einem der Ansprüche 1 bis 3, **dadurch gekennzeichnet, dass** das Sicherheitsmodul eine Datei mit berechneten Unterschriften von zu schützenden, im Speicher (MEM) enthaltenden Dateien enthält, und dass die Karte Mittel umfasst, um zu überprüfen, dass die Unterschrift einer bestimmten Datei die gleiche ist wie die im Sicherheitsmodul gespeicherte Unterschrift.

## Claims

1. A memory card (CC) with several integrated memory circuits constituting a removable mass memory for a microcomputer (PC), **characterised in that** it also comprises:
a security module (MPS) which consists of a specific integrated circuit comprising a microprocessor and at least one memory whose content is not accessible in read mode at the end terminals of the chip, and is used exclusively by the microprocessor for executing security programs involving secret codes placed in this inaccessible memory, in order to provide security against access to at least some memory areas by a user of the microcomputer who is not authorised for this access; and a control processor which manages the security programs of the memory card and emits signals for control of access to the memory chips according to access requests from the PC and according to security information given by the security module, enabling the latter to control the means of access to the various memory chips, the said control processor implementing an interface between the card connector and the chip providing security and an interface between the chip providing security and the memory chips.

2. A memory card according to Claim 1, **characterised in that** the security module (MPS) is a single integrated-circuit chip comprising a non-volatile memory with confidential information, and program security circuitry, able to use this confidential information and other information supplied by the user, in order to deliver enable instructions after checking that a predetermined relationship exists between these two types of information.

3. A memory card according to one of Claims 1 and 2, **characterised in that** the control processor consists of a microcontroller chip (MPC) containing programs in non-volatile memory for controlling the security module (MPS), making it execute authorisation verification tasks and using the signals emitted by the security module in order to control access to the memory areas according to these signals.

4. A memory card according to one of the preceding claims, **characterised in that** means are provided for executing a program for encrypting the data introduced into the memory and a program for decrypting the data extracted from the memory, the encrypting program and the decrypting program being executable only after the supply of authorisation signals by the security module.

5. A memory card according to claim 4, **characterised in that** the encrypting and decrypting programs can be executed by means of an encrypting key contained in the security module.

6. A memory card according to one of Claims 1 to 3, **characterised in that** the security module contains a file of computerised signatures of files to be protected contained in the memory (MEM), and **in that** the card comprises means for checking that the signature of a given file is indeed the same as the signature stored in the security module.
